# FASCICULE DE BREVET EUROPEEN

(11) **EP 3 337 646 B1**
(45) Date de publication et mention de la délivrance du brevet: **01.03.2023**
(21) Numéro de dépôt: 16747836.1
(22) Date de dépôt: 12.07.2016
(51) Int. Cl.: B25J 17/02, B25J 9/06, B25J 9/10

(54) **BRAS DE ROBOT ARTICULÉ**
GELENKROBOTERARM
ARTICULATED ROBOT ARM

(30) Priorité: 21.08.2015 FR 1557849
(43) Date de publication de la demande: 27.06.2018
(73) Titulaire: NIMBL'BOT SAS, 33400 Talence (FR)
(72) Inventeur: DUFAU, Ludovic, 33400 Talence (FR)
(74) Mandataire: Aquinov
(86) Numéro de dépôt international: PCT/FR2016/051795
(87) Numéro de publication internationale: WO 2017/032932

(56) Documents cités:
- CA-A1- 2 773 839
- CA-A1- 2 807 287

## Description

La présente invention concerne un bras de robot articulé.

Les robots industriels sont utilisés pour effectuer un très large éventail de tâches industrielles, rapidement et avec précision.

Traditionnellement, les articulations des bras de robots industriels présentent plusieurs segments pivotants les uns par rapport aux autres.

Chaque liaison pivot présente une motorisation indépendante. Le plus souvent, les moteurs des pivots des bras de robot sont alimentés par des connexions électriques ou pneumatiques positionnées à l'extérieur du bras de robot. Ces connexions entravent les rotations du bras de robot et en augmentent l'encombrement et les risques de collision avec l'environnement extérieur.

Les documents CA2807287 et CA2773839 font partie de l'état de la technique.

En conséquence, la présente invention a pour objectif de proposer un bras de robot articulé présentant un encombrement réduit et pouvant effectuer des déplacements couvrant un angle solide élevé.

Selon une définition générale, l'invention concerne un bras de robot articulé selon la revendication 1.

Il est précisé que dans le présent document, par tronc de cylindre trapézoïdal, on entend, une portion de cylindre avec au moins une section circulaire inclinée par rapport à l'axe de révolution du cylindre.

La rotation des troncs de cylindres trapézoïdaux permet au bras de robot de décrire des trajectoires complexes dans l'espace et de couvrir un angle solide élevé. De plus, les moyens de pilotage angulaire, associés aux troncs de cylindres trapézoïdaux, permettent au bras de robot d'effectuer des déplacements précis. En outre, d'une manière avantageuse, l'organe interne de maintien et les moyens de pilotage angulaire sont positionnés dans les troncs de cylindre. Ainsi le bras de robot selon l'invention présente un encombrement réduit et peut effectuer des déplacements couvrant un angle solide élevé.

L'organe interne de maintien peut comprendre un câble relié à des moyens de tension du câble. La tension du câble peut permettre d'exercer un effort de compression sur le bras de robot.

Ainsi, le câble peut permettre de précontraindre le bras de robot, pour maintenir les troncs de cylindres trapézoïdaux en contact lors, par exemple, du transport d'une charge.

Les moyens de pilotage angulaire peuvent comprendre au moins une roue dentée adaptée pour coopérer avec une couronne dentée positionnée dans un tronc de cylindre trapézoïdal correspondant.

L'utilisation d'une roue dentée et d'une couronne dentée permet de piloter précisément la rotation de chaque tronc de cylindre trapézoïdal.

Les moyens de pilotage angulaire peuvent comprendre au moins un moteur présentant un stator lié à l'organe interne de maintien et un rotor configuré pour entraîner en rotation la roue dentée.

La liaison du stator du moteur à l'organe interne de maintien permet avantageusement aux connexions du moteur de cheminer à l'intérieur du bras de robot. Cette disposition technique permet de diminuer l'encombrement du bras de robot et permet au bras de robot d'évoluer sans être entravé par des connexions extérieures.

Selon une disposition particulière, le rotor peut présenter une vis sans fin configurée pour entraîner en rotation la roue dentée.

La vis sans fin permet de piloter précisément la rotation du tronc de cylindre trapézoïdal auquel elle est associée. De plus, l'irréversibilité de la liaison entre la vis sans fin et la roue dentée permet de garantir le maintien en position du bras de robot. Cette disposition peut donc permettre d'augmenter la sécurité du bras de robot.

Selon une autre disposition, le rotor peut être relié à un dispositif de réduction à engrenages configuré pour entraîner en rotation la roue dentée.

L'organe interne de maintien peut comprendre une pluralité de segments articulés les uns par rapport aux autres.

De plus, l'organe interne de maintien peut comprendre plusieurs joints de cardan positionnés chacun entre deux segments pour permettre l'articulation des segments les uns par rapport aux autres.

Le bras de robot peut comprendre des moyens de roulement positionnés entre chaque tronc de cylindre trapézoïdal, pour permettre la rotation des troncs de cylindre trapézoïdaux les uns par rapport aux autres.

Selon une disposition particulière, les moyens de roulement peuvent comprendre au moins une bille.

Selon une disposition particulière, les moyens de roulement peuvent comprendre au moins un rouleau cylindrique.

Le bras de robot peut comprendre au moins un dispositif de mesure d'effort relié au câble, configuré pour mesurer un effort mécanique appliqué au câble.

Le dispositif de mesure d'effort peut permettre d'optimiser le pilotage du bras de robot et d'en augmenter la sécurité.

Selon une disposition particulière, la roue dentée et la couronne dentée peuvent présenter chacune une denture droite.

Selon une disposition particulière, la roue dentée et la couronne dentée peuvent présenter chacune une denture conique.

Selon une disposition particulière, le bras de robot peut comprendre un nombre pair de troncs de cylindres.

Pour sa bonne compréhension, l'invention est décrite en référence aux dessins ci-annexés qui représentent à titre d'exemple non limitatif une forme de réalisation d'un bras de robot selon celle-ci.
- La figure 1 est une vue de face d'un bras de robot selon l'invention ;
- La figure 2 est une vue en coupe partielle, en perspective, d'un bras de robot selon l'invention ;
- La figure 3 est une vue en coupe, de face, d'un bras de robot selon l'invention ;
- La figure 4 est une vue de face d'un bras de robot selon l'invention, définissant un coude.

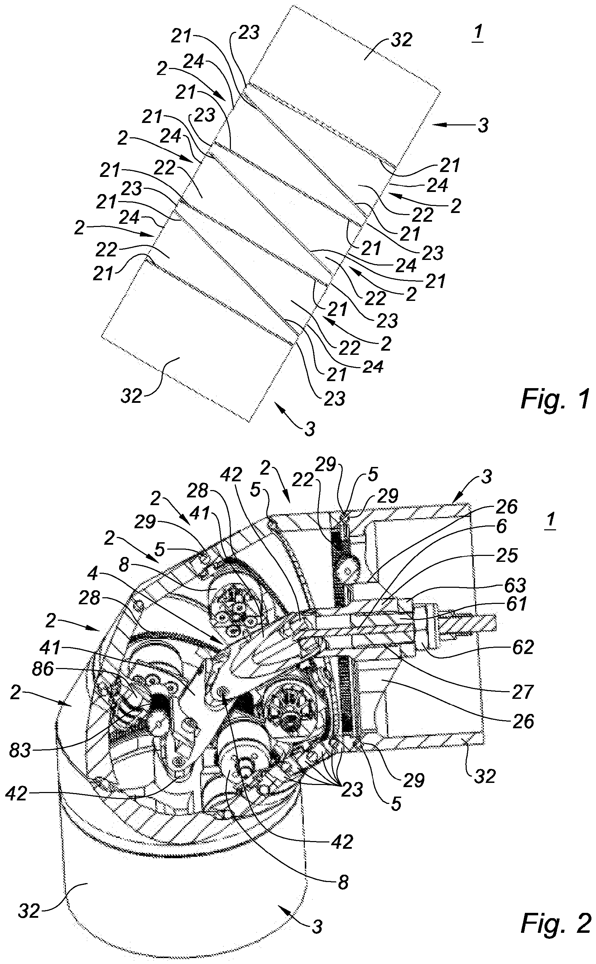

L'invention concerne un bras de robot 1 articulé, représenté sur les figures 1 à 4.

Le bras de robot 1 comprend essentiellement, une pluralité de troncs de cylindres trapézoïdaux 2 disposés en série autour d'un organe interne de maintien 4. Selon le mode de réalisation ici présenté, le bras de robot 1 comprend un nombre pair de troncs de cylindres trapézoïdaux 2. Chaque tronc de cylindre trapézoïdal 2 est configuré pour pivoter autour de l'organe interne de maintien 4. L'organe interne de maintien 4 présente des moyens de pilotage angulaire permettant de commander la rotation de chaque tronc de cylindre trapézoïdal 2.

Chaque tronc de cylindre trapézoïdal 2 présente deux sections circulaires 21 reliées entre elles par une paroi 22.

La paroi 22 présente une petite hauteur 23 et une grande hauteur 24. La grande hauteur 24 présente une cote supérieure à la cote de la petite hauteur 23.

De plus, selon le mode de réalisation ici présenté, les troncs de cylindres trapézoïdaux 2 présentent une géométrie de trapèze rectangle. Ainsi, l'une des deux sections circulaires 21, de chaque tronc de cylindre trapézoïdal 2, est sensiblement perpendiculaire à la paroi 22.

Selon le mode de réalisation ici présenté, les troncs de cylindres trapézoïdaux 2 sont positionnés deux à deux, de sorte que leurs sections circulaires 21 sensiblement perpendiculaire à une paroi 22 correspondante soient juxtaposées l'une à l'autre.

Chaque tronc de cylindre trapézoïdal 2 présente une couronne dentée 28 positionnée contre la paroi 22, à l'intérieur du tronc de cylindre trapézoïdal 2.

Selon le mode de réalisation ici présenté, la couronne dentée 28 est à denture droite.

Chaque tronc de cylindre trapézoïdal 2 peut, par exemple, être réalisé dans un métal moulé puis usiné.

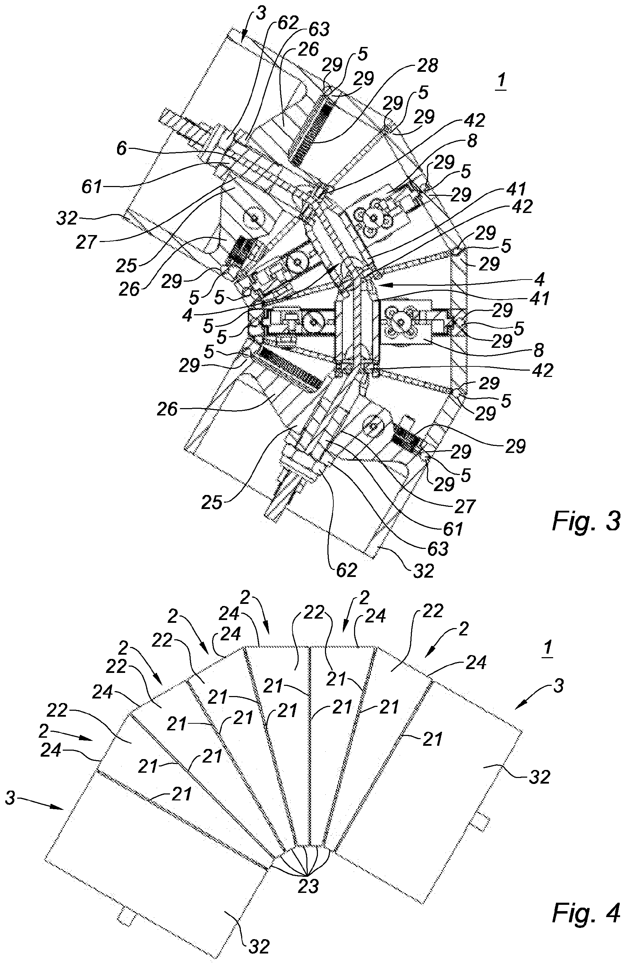

En outre, comme on peut l'observer sur les figures 2 et 3, un tronc de cylindre d'extrémité 3 est positionné à chaque extrémité du bras de robot 1. Les troncs de cylindres d'extrémité 3 comprennent un moyeu central 25 relié à une paroi extérieure 32 par quatre nervures 26. Le moyeu central 25 présente un alésage 27. Le moyeu central 25 présente une première extrémité sensiblement plane, destinée à servir de butée à une rondelle 63 et un écrou 62 qui seront présentés ultérieurement. Une deuxième extrémité du moyeu central présente une chape configurée pour recevoir un croisillon pour former un joint de cardan 42 avec l'organe de maintien interne 4.

A l'usage, l'un des troncs de cylindres d'extrémité 3 peut être muni d'un outil, comme par exemple, une pince, un dispositif de soudure, d'usinage ou de découpe.

En référence aux figures 2 et 3, chaque section circulaire 21 peut présenter une gorge 29.

Selon l'exemple ici présenté, la gorge 29 est conçue pour recevoir des billes 5. Cependant, selon un autre mode de réalisation, la gorge 29 peut, par exemple, accueillir des rouleaux.

Comme on peut le remarquer sur les figures 2 et 3, chaque bille 5 est à l'interface entre deux gorges 29, définissant ainsi un roulement entre deux troncs de cylindres trapézoïdaux 2. En d'autres termes, les billes 5 permettent aux troncs de cylindre trapézoïdaux 2 de pivoter les uns par rapport aux autres.

Le bras de robot 1 comprend aussi un organe interne de maintien 4, visible sur les figures 2 et 3.

Selon le mode de réalisation ici présenté, l'organe interne de maintien 4 comprend une pluralité de segments 41 reliés deux à deux par des joints de cardan 42.

De plus, chaque extrémité de l'organe interne de maintien 4 est liée par un joint de cardan 42 au moyeu central 25 d'un tronc de cylindre d'extrémité 3 correspondant.

Comme on peut le remarquer sur les figures 2 et 3, un câble 6 traverse l'organe interne de maintien 4 et les alésages 27 des troncs de cylindres d'extrémités 3.

Selon le mode de réalisation ici présenté, le câble 6 peut, par exemple, être réalisé en acier. De plus, le câble 6 peut être dimensionné pour rompre lors de l'exercice d'un effort mécanique prédéterminé.

En outre, tel que représenté sur la figure 3, chacune des deux extrémités du câble 6 est munie d'un barillet tendeur 61 positionné dans l'alésage 27. Le barillet tendeur 61 est associé à un écrou 62 et une rondelle 63 positionnée en butée sur la première extrémité du moyeu central 25. Tel que cela sera développé ultérieurement, l'écrou 62 et le barillet tendeur 61 permettent de régler la tension du câble 6.

Un dispositif de mesure d'efforts (non représenté) est connecté au câble 6.

Les moyens de positionnement angulaire comprennent notamment des moteurs 8 visibles sur les figures 2 et 3.

Le stator 81 de chaque moteur 8 est fixé à l'un des segments 41 de l'organe interne de maintien 4.

Selon le mode de réalisation ici présenté, le rotor 82 de chaque moteur 8 est lié à une vis sans fin 85. La vis sans fin 85 est configurée pour entraîner en rotation une roue dentée 86. La roue dentée 86 est engrenée sur la couronne dentée 28 d'un tronc de cylindre trapézoïdal 2 correspondant, pour commander la rotation du tronc de cylindre trapézoïdal 2.

Selon le mode de réalisation ici présenté, la roue dentée 86 présente deux étages, un premier étage à denture droite conçu pour être engrené sur la couronne dentée 28, et un deuxième étage à denture hélicoïdale conçu pour être engrené sur la vis sans fin 85.

Les figures 1 à 4 permettent d'apprécier le fonctionnement du bras de robot 1.

A l'usage, la tension du câble 6 est ajustée pour précontraindre le bras de robot 1, pour maintenir les troncs de cylindres trapézoïdaux 2 en contact les uns avec les autres, lors, par exemple du transport de charges lourdes.

Il est précisé que la présente description part d'une situation dans laquelle le bras de robot 1 est dans une position sensiblement rectiligne présentée sur la figure 1.

En position sensiblement rectiligne, les troncs de cylindres trapézoïdaux sont orientés de sorte que la petite hauteur 23 de chaque tronc de cylindre trapézoïdal 2 soit juxtaposée à la grande hauteur 24 du tronc de cylindre trapézoïdal 2 adjacent.

La mise en marche d'un moteur 8 permet la rotation d'un tronc de cylindre trapézoïdal 2 correspondant. D'une manière particulièrement avantageuse, la liaison entre la vis sans fin 85, la roue dentée 86 et la couronne dentée 28 permet de commander précisément la rotation de chaque tronc de cylindre trapézoïdal 2. De plus, la liaison entre la vis sans fin 85 et la roue dentée 86 permet de garantir le blocage en position de chaque tronc de cylindre trapézoïdal 2.

Les moteurs 8 permettent de commander indépendamment la rotation des troncs de cylindres trapézoïdaux 2, ce qui permet au bras de robot 1 de couvrir un angle solide élevé. Ainsi, le passage du bras de robot 1 d'une position sensiblement rectiligne représentée sur la figure 1 à une position sensiblement coudée représentée sur la figure 4, nécessite la rotation de certains troncs de cylindres trapézoïdaux 2. Dans la position représentée sur la figure 4, les troncs de cylindres trapézoïdaux 2 sont orientés de sorte que les petites hauteurs 23 des troncs de cylindres trapézoïdaux 2 adjacents soit juxtaposées les unes aux autres.

Ainsi l'invention propose un bras de robot 1 qui présente un encombrement réduit et qui peut effectuer des déplacements couvrant un angle solide élevé.

## Revendications

1. Bras de robot (1) articulé **caractérisé en ce qu'**il comprend une pluralité de troncs de cylindres trapézoïdaux (2) disposés en série autour d'un organe interne de maintien (4), chaque tronc de cylindre trapézoïdal (2) étant configuré pour pivoter autour de l'organe interne de maintien (4), l'organe interne de maintien (4) présentant des moyens de pilotage angulaire comprenant des moteurs (8) permettant de commander indépendamment la rotation de chaque tronc de cylindre trapézoïdal (2).

2. Bras de robot (1) selon la revendication 1, **caractérisé en ce que** l'organe interne de maintien (4) comprend un câble (6) relié à des moyens de tension du câble (6), la tension du câble (6) permettant d'exercer un effort de compression sur le bras de robot (1).

3. Bras de robot (1) selon l'une des revendications 1ou 2 **caractérisé en ce que** les moyens de pilotage angulaire comprennent au moins une roue dentée (86) adaptée pour coopérer avec une couronne dentée (28) positionnée dans un tronc de cylindre trapézoïdal (2) correspondant.

4. Bras de robot (1) selon la revendication 3, **caractérisé en ce que** les moyens de pilotage angulaire comprennent au moins un moteur (8) présentant un stator (81) lié à l'organe interne de maintien (4) et un rotor (82) configuré pour entraîner en rotation la roue dentée (86).

5. Bras de robot (1) selon la revendication 4, **caractérisé en ce que** le rotor (82) présente une vis sans fin (85) configurée pour entrainer en rotation la roue dentée (86).

6. Bras de robot (1) selon la revendication 4, **caractérisé en ce que** le rotor (82) est relié à un dispositif de réduction à engrenages configuré pour entrainer en rotation la roue dentée (86).

7. Bras de robot (1) selon l'une des revendications 1à 6, **caractérisé en ce que** l'organe interne de maintien (4) comprend une pluralité de segments (41) articulés les uns par rapport aux autres.

8. Bras de robot (1) selon la revendication 7, **caractérisé en ce que** l'organe interne de maintien (4) comprend plusieurs joints de cardan (42) positionnés chacun entre deux segments (41) pour permettre l'articulation des segments (41) les uns par rapport aux autres.

9. Bras de robot (1) selon l'une des revendications 1à 8, **caractérisé en ce qu'**il comprend des moyens de roulement positionnés entre chaque tronc de cylindre trapézoïdal (2), pour permettre la rotation des troncs de cylindre trapézoïdaux les uns par rapport aux autres.

10. Bras de robot (1) selon la revendication 9, **caractérisé en ce que** les moyens de roulement comprennent au moins une bille (5).

11. Bras de robot (1) selon la revendication 9, **caractérisé en ce que** les moyens de roulement comprennent au moins un rouleau cylindrique.

12. Bras de robot (1) selon l'une des revendications 2 à 11, **caractérisé en ce qu'**il comprend au moins un dispositif de mesure d'effort relié au câble (6) configuré pour mesurer un effort mécanique appliqué au câble .

## Patentansprüche

1. Gelenkiger Roboterarm (1), **dadurch gekennzeichnet, dass** er eine Vielzahl von trapezförmigen schief abgeschnittenen Zylindern (2) umfasst, die in Reihe um ein inneres Halteelement (4) herum angeordnet sind, wobei jeder trapezförmige schief abgeschnittene Zylinder (2) konfiguriert ist, um um das innere Halteelement (4) herum zu schwenken, wobei das innere Halteelement (4) Winkellenkmittel aufweist, umfassend Motoren (8), die es ermöglichen, die Drehung jedes trapezförmigen schief abgeschnittenen Zylinders (2) unabhängig zu steuern.

2. Roboterarm (1) nach Anspruch 1, **dadurch gekennzeichnet, dass** das innere Halteelement (4) ein Kabel (6) umfasst, das mit Mitteln zum Spannen des Kabels (6) verbunden ist, wobei das Spannen des Kabels (6) ermöglicht, eine Druckkraft auf den Roboterarm (1) auszuüben.

3. Roboterarm (1) nach einem der Ansprüche 1 oder 2, **dadurch gekennzeichnet, dass** die Winkellenkmittel mindestens ein Zahnrad (86) umfassen, das geeignet ist, um mit einem Zahnkranz (28) zusammenzuwirken, der in einem entsprechenden trapezförmigen schief abgeschnittenen Zylinder (2) positioniert ist.

4. Roboterarm (1) nach Anspruch 3, **dadurch gekennzeichnet, dass** die Winkellenkmittel mindestens einen Motor (8) umfassen, der einen an das innere Halteelement (4) gebundenen Stator (81) und einen Rotor (82) aufweist, der konfiguriert ist, um das Zahnrad (86) drehend anzutreiben.

5. Roboterarm (1) nach Anspruch 4, **dadurch gekennzeichnet, dass** der Rotor (82) eine Schnecke (85) aufweist, die konfiguriert ist, um das Zahnrad (86) drehend anzutreiben.

6. Roboterarm (1) nach Anspruch 4, **dadurch gekennzeichnet, dass** der Rotor (82) mit einer Getriebeuntersetzungsvorrichtung verbunden ist, die konfiguriert ist, um das Zahnrad (86) drehend anzutreiben.

7. Roboterarm (1) nach einem der Ansprüche 1 bis 6, **dadurch gekennzeichnet, dass** das innere Halteelement (4) eine Vielzahl von Segmenten (41) umfasst, die relativ zueinander gelenkig angebracht sind.

8. Roboterarm (1) nach Anspruch 7, **dadurch gekennzeichnet, dass** das innere Halteelement (4) eine Vielzahl von Kardangelenken (42) umfasst, die jeweils zwischen zwei Segmenten (41) positioniert sind, um eine gelenkige Anbringung der Segmente (41) relativ zueinander zu ermöglichen.

9. Roboterarm (1) nach einem der Ansprüche 1 bis 8, **dadurch gekennzeichnet, dass** er Rollmittel umfasst, die zwischen jedem trapezförmigen schief abgeschnittenen Zylinder (2) positioniert sind, um die Drehung der trapezförmigen schief abgeschnittenen Zylinder relativ zueinander zu ermöglichen.

10. Roboterarm (1) nach Anspruch 9, **dadurch gekennzeichnet, dass** die Rollmittel mindestens eine Kugel (5) umfassen.

11. Roboterarm (1) nach Anspruch 9, **dadurch gekennzeichnet, dass** die Rollmittel mindestens eine zylindrische Rolle umfassen.

12. Roboterarm (1) nach einem der Ansprüche 2 bis 11, **dadurch gekennzeichnet, dass** er mindestens eine mit dem Kabel (6) verbundene Kraftmessvorrichtung umfasst, die konfiguriert ist, um eine auf das Kabel aufgebrachte mechanische Kraft zu messen.

## Claims

1. Articulated robot arm (1), **characterized in that** it comprises a plurality of trapezoidal truncated cylinders (2) arranged in series around an internal holding member (4), each trapezoidal truncated cylinder (2) being configured to pivot around the internal holding member (4), the internal holding member (4) having angular control means comprising motors (8) making it possible to independently control the rotation of each trapezoidal truncated cylinder (2).

2. Robot arm (1) according to claim 1, **characterized in that** the internal holding member (4) comprises a cable (6) connected to means for tensioning the cable (6), the tensioning of the cable (6) making it possible to exert a compressive stress on the robot arm (1).

3. Robot arm (1) according to either claim 1 or claim 2, **characterized in that** the angular control means comprise at least one toothed wheel (86) suitable for engaging with a ring gear (28) positioned in a corresponding trapezoidal truncated cylinder (2).

4. Robot arm (1) according to claim 3, **characterized in that** the angular control means comprise at least one motor (8) having a stator (81) connected to the internal holding member (4) and a rotor (82) configured to rotate the toothed wheel (86).

5. Robot arm (1) according to claim 4, **characterized in that** the rotor (82) has an endless screw (85) configured to rotate the toothed wheel (86).

6. Robot arm (1) according to claim 4, **characterized in that** the rotor (82) is connected to a gear reduction device configured to rotate the toothed wheel (86).

7. Robot arm (1) according to any of claims 1 to 6, **characterized in that** the internal holding member (4) comprises a plurality of segments (41) articulated relative to each other.

8. Robot arm (1) according to claim 7, **characterized in that** the internal holding member (4) comprises a plurality of universal joints (42) each positioned between two segments (41) to allow the articulation of the segments (41) relative to each other.

9. Robot arm (1) according to any of claims 1 to 8, **characterized in that** it comprises rolling means positioned between each trapezoidal truncated cylinder (2) in order to allow the trapezoidal truncated cylinders to rotate relative to each other.

10. Robot arm (1) according to claim 9, **characterized in that** the rolling means comprise at least one ball (5).

11. Robot arm (1) according to claim 9, **characterized in that** the rolling means comprise at least one cylindrical roller.

12. Robot arm (1) according to any of claims 2 to 11, **characterized in that** it comprises at least one force measuring device which is connected to the cable (6) and configured to measure a mechanical force applied to the cable.
